# EUROPEAN PATENT APPLICATION

(11) **EP 4 329 016 A1**
(43) Date of publication of application: **28.02.2024**
(21) Application number: 23802134.9
(22) Date of filing: 06.05.2023
(51) Int. Cl.: H01M 4/62

(54) **IONIC CONDUCTIVE AGENT, ELECTRODE SHEET GROUP, AND LITHIUM-ION BATTERY**

(30) Priority: 14.07.2022 CN 202210825511
(71) Applicant: Dragonfly Laboratory (Shenzhen) Co., Ltd, Shenzhen, Guangdong 518000 (CN)
(72) Inventor: JIANG, Wenfeng, Shenzhen, Guangdong 518000 (CN)
(74) Representative: Ponti & Partners, S.L.P
(86) International application number: PCT/CN2023/092518
(87) International publication number: WO 2024/012023

(57) **Abstract**

The present disclosure provides an ionic conductive additive, an electrode plate group and a lithium-ion battery, and the resistivity of the ionic conductive additive is greater than 10Ω m; the oil absorption of the ionic conductive additive is greater than 100ml/100g; the ionic conductive additive is a solid powder; and the median particle size of the solid powder is less than 50 µm. The ionic conductive additive is used to meet the requirements of lithium-ion conductivity while reducing the participation in the reaction of positive and negative electrodes.

## Description

### Cross-References to Related Disclosures

The present disclosure claims priority to Chinese Patent Application No. 202210825511.1 filed on July 14, 2022, with the Chinese Patent Office, and entitled "Ionic Conductive Additive, Electrode Plate Group, and Lithium-ion Battery", the contents of which are incorporated herein by reference in entirety.

### Technical Field

The present disclosure relates to the field of battery technology, and in particular to an ionic conductive additive, an electrode plate group, and a lithium-ion battery.

### Background Art

In the lithium-ion battery manufacturing industry, with the improvement of battery energy density, the surface density of positive and negative electrode plates is getting higher, and the compaction density is increasing, which leads to the pores of positive and negative electrode plates becoming smaller. At the same time, due to the consistency of the various processes, it results in the non-uniformity of pores of electrode plate, which brings about the difficulties in wetting by the electrolyte. Meanwhile, in the battery cycle process, the materials of positive and negative electrodes themselves expand and contract along with the charging and discharging, which leads to the electrolyte constantly being extruded and sucked back. When the local electrolyte cannot meet the immediate requirements of the charging and discharging current, the direct current impedance of the battery increases dramatically, and in serious cases, lithium precipitation will be formed in the negative electrode, resulting in a potential safety hazard.

There are two main factors affecting the conductivity of the electrode plate, one is the electronic conductivity and the other is the ionic conductivity. In the related technology, high-oil-factor carbon black is directly adopted to solve the problem at once. The main problem brought about by the direct use of high-oil-factor carbon black is that carbon black itself is a highly conductive material, which will directly participate in the reactions of the positive and negative electrodes, thereby leading to the gas production and expansion of the battery, capacity reduction, and so on. Therefore, an ionic conductive additive, an electrode plate group and a lithium-ion battery are needed to solve the above problems.

### Summary

The purpose of the present disclosure is to provide an ionic conductive additive, an electrode plate group, and a lithium-ion battery. The ionic conductive additive is for meeting the conductive requirements of lithium ions while reducing participating reactions in the positive and negative electrodes.

In the first aspect, the present disclosure provides an ionic conductive additive, wherein the resistivity of the ionic conductive additive is greater than 10 Ω·m; and the oil absorption of the ionic conductive additive is greater than 100ml/100g. The ionic conductive additive is solid powder, and the median particle size of the solid powder is less than 50µm.

The beneficial effects of the method of the present disclosure are as follows. By configuring the resistivity of the ionic conductive additive to be greater than 10Ω·m, and the oil absorption of the ionic conductive additive to be greater than 100ml/100g, the ionic conductive additive is prevented from participating in the reaction of the positive and negative electrodes, thereby preventing the expansion of the battery due to gas production by itself, and avoiding the reduction of the battery capacity. The ionic conductive additive is a solid powder, and the median particle size of solid powder is less than 50µm, so that clogging of pores or scratches on the surface of the electrode plate when coating ingredients can be avoided.

Optionally, the ionic conductive additive is configured as an insulating material or a non-insulating material. When the ionic conductive additive is an insulating material, the ionic conductive additive is preferably at least one of aluminum oxide, silicon oxide, and magnesium oxide.

In the second aspect, the present disclosure provides an electrode plate group, comprising: a positive electrode plate and a negative electrode plate, wherein at least one of the positive electrode plate and the negative electrode plate comprises ionic conductive additive described in any one of the first aspect. The positive electrode plate is provided with a positive active substance; and the negative electrode plate is provided with a negative active substance.

Optionally, the positive electrode plate is provided with the ionic conductive additive in the proportion range of [0.01%, 30%] of the total weight of the positive electrode plate; and the negative electrode plate is provided with the ionic conductive additive in the proportion range of [0.01%, 30%] of the total weight of the negative electrode plate. The beneficial effect is to ensure that the content of the ionic conductive additive is sufficient to provide effective ionic conduction function. At the same time, the loss of the effective capacity of the battery due to the high content of the ionic conductive additive is avoided, which is conducive to reducing the difficulty of the ingredient coating.

Optionally, the positive electrode plate provided with the ionic conductive additive is further provided with an electronic conductive additive, wherein the ionic conductive additive is in the proportion range of [5%, 100%] of the total weight of the positive electrode conductive additive. The total weight of the positive electrode conductive additive is the sum of the weight of the ionic conductive additive of the positive electrode plate and the weight of the electronic conductive additive of the positive electrode plate. The negative electrode plate provided with the ionic conductive additive is also provided with an electronic conductive additive, and the proportion range of the ionic conductive additive in the total weight of negative electrode conductive additive is [5%, 100%]. The total weight of the negative electrode conductive additive is the sum of the weight of the ionic conductive additive of the negative electrode plate and the weight of the electronic conductive additive of the negative electrode plate. It is worth noting that in systems with high electronic conductivity, the ionic conductive additive of the present disclosure can be used alone; and they can also be used in combination with other conductive additives in other fields. In the present disclosure, the needs to address electronic conductivity and ionic conductivity are separated, wherein the conductivity of lithium ions is solved by employing an ionic conductive additive alone, which can optimize the formulation of the battery, increase the range of materials that can be selected and contribute to cost savings.

Optionally, the material of the positive electrode active substance is selected from at least one of lithium cobalt oxide, lithium manganate, lithium iron phosphate, lithium iron manganese phosphate, lithium nickel cobalt manganate, and nickel manganese spinel.

Optionally, the material of the negative electrode active substance is selected from at least one of natural graphite, artificial graphite, mesocarbon microbeads, lithium titanate, silicon alloys, tin alloys, and active lithium metal.

Optionally, one side of the positive electrode plate is provided with a positive current collector, wherein the positive electrode plate includes a mixture of the positive active substance and the ionic conductive additive. One side of the negative electrode plate is provided with a negative current collector, wherein the negative electrode plate includes a mixture of the negative active substance and the ionic conductive additive.

Optionally, the positive electrode current collector is provided as an aluminum foil; and the negative electrode current collector is provided as a copper foil.

In the third aspect, the present disclosure provides a lithium-ion battery, comprising the electrode plate group described in any one of the second aspect.

Optionally, the lithium-ion battery further comprises a battery package shell, wherein the electrode plate group is provided within the package shell.

### Brief Description of Drawings

FIG. 1 is a structural schematic view of an electrode plate group provided in the present disclosure; and
FIG. 2 is a structural schematic view of a lithium-ion battery provided in the present disclosure.

Reference numerals:
101-positive electrode plate; 102-negative electrode plate; 103-positive electrode current collector; 104-negative electrode current collector; 105-battery package shell.

### Detailed Description of Embodiments

In order to make the purpose, technical solutions and advantages of the present disclosure clearer, the technical solutions in the embodiments of the present disclosure will be described clearly and completely in the following in conjunction with the drawings of the present disclosure, and it is clear that the described embodiments are a part of the embodiments of the present disclosure, and not all of the embodiments. Based on the embodiments in the present disclosure, all other embodiments obtained by a person of ordinary skill in the art without inventive effort fall within the scope of protection of the present disclosure. Unless otherwise defined, technical or scientific terms used herein shall have the ordinary meaning as understood by a person of ordinary skill in the art to which the present disclosure belongs. As used herein, the word "including" and similar words are intended to mean that the components or objects appearing before the word include the components or objects enumerated after the word and their equivalents, without excluding other components or objects.

In response to a problem in the related technology, the present disclosure provides an ionic conductive additive, wherein the ionic conductive additive has a resistivity greater than 10 Ω·m. The oil absorption of the ionic conductive additive is more than 100ml/100g. The ionic conductive additive is a solid powder. The median particle size of solid powder is less than 50 µm.

It is worth noting that the resistivity of the ionic conductive additive provided is greater than 10 Ω·m. The oil absorption of the ionic conductive additive is more than 100ml/100g. The participation of ionic conductive additives in the reaction of positive and negative electrodes is avoided, thereby preventing the expansion of the battery due to gas production and avoiding the reduction of battery capacity. The ionic conductive additive is a solid powder. The median particle size of solid powder is less than 50 µm. Clogging of pores or scratches on the surface of the electrode plate when coating ingredients can be avoided. The median particle size is the particle size D50, i.e., the particle size that corresponds to a cumulative size distribution percentage of 50%.

In some embodiments, the ionic conductive additive is configured as an insulating material or a non-insulating material. When the ionic conductive additive is configured as an insulating material, preferably, the ionic conductive additive is selected from at least one of aluminum oxide, silicon oxide, and magnesium oxide.

In some specific embodiments, the material of the ionic conductive additive is configured as aluminum oxide.

In some other specific embodiments, the material of the ionic conductive additive is configured as silicon oxide.

In some further specific embodiments, the material of the ionic conductive additive is configured as magnesium oxide.

In some further specific embodiments, the material of the ionic conductive additive is configured as a mixture of aluminum oxide, silicon oxide and magnesium oxide.

It is worth stating that the ionic conductive additive can be configured as an insulating material of any composition.

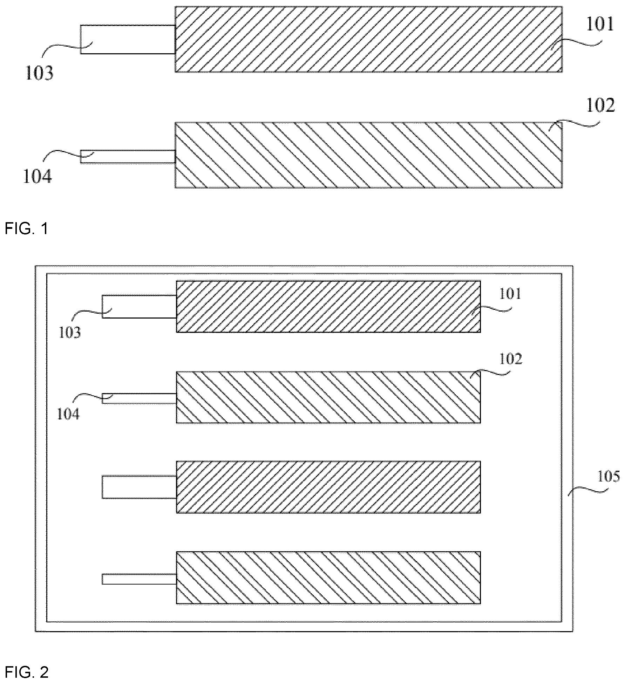

FIG. 1 is a structural schematic view of an electrode plate group provided in the present disclosure.

As shown in FIG. 1, the present disclosure provides an electrode plate group, comprising: positive electrode plate 101 and negative electrode plate 102. At least one of the positive electrode plate 101 and the negative electrode plate 102 comprises the ionic conductive additive described in any one of the first aspect. The positive electrode plate 101 is provided with a positive electrode active substance. The negative electrode plate 102 is provided with a negative electrode active substance.

In some embodiments, the material of the positive electrode active substance is selected from at least one of lithium cobalt oxide, lithium manganate, lithium iron phosphate, lithium manganese iron phosphate, lithium nickel cobalt manganate, and nickel manganese spinel.

In some specific embodiments, the material of the positive electrode active substance is configured as lithium cobalt oxide.

In some other specific embodiments, the material of the positive electrode active substance is configured as lithium manganate.

In some further specific embodiments, the material of the positive electrode active substance is configured as lithium iron phosphate.

In some further specific embodiments, the material of the positive electrode active substance is configured as lithium manganese iron phosphate.

In some further specific embodiments, the material of the positive electrode active substance is configured as lithium nickel cobalt manganate.

It is worth stating that, in some specific embodiments, the material of the positive electrode active substance is configured as nickel manganese spinel.

In some embodiments, the material of the negative electrode active substance is selected from at least one of natural graphite, artificial graphite, mesocarbon microbeads, lithium titanate, silicon alloys, tin alloys, and active lithium metal.

In some specific embodiments, the material of the negative electrode active substance is configured as natural graphite.

In some other specific embodiments, the material of the negative electrode active substance is configured as artificial graphite.

In some further specific embodiments, the material of the negative electrode active substance is configured as mesocarbon microbeads.

In some further specific embodiments, the material of the negative electrode active substance is configured as lithium titanate.

In some further specific embodiments, the material of the negative electrode active substance is configured as silicon alloy.

It is worth stating that, in some specific embodiments, the material of the negative electrode active substance can also be configured as a tin alloy or an active lithium metal.

In some embodiments, the proportion range of the ionic conductive additive provided in the positive electrode plate 101 to the total weight of the positive electrode plate is [0.01 %, 30%]. The proportion range of the ionic conductive additive provided in the negative electrode plate 102 to the total weight of the negative electrode plate is [0.01%, 30%]. This configuration is conducive to ensuring that the content of the ionic conductive additive is sufficient to provide effective ionic conduction function. At the same time, it avoids the loss of the effective capacity of the battery due to the high content of the ionic conductive additive, which helps to reduce the difficulty of ingredient coating.

In some specific embodiments, the proportion of the ionic conductive additive provided in the positive electrode plate 101 to the total weight of the positive electrode plate 101 is 0.01%. The proportion of the ionic conductive additive provided in the negative electrode plate 102 to the total weight of the negative electrode plate 102 is 0.01%.

In some other specific embodiments, the proportion of the ionic conductive additive provided in the positive electrode plate 101 to the total weight of the positive electrode plate 101 is 30%. The proportion of the ionic conductive additive provided in the negative electrode plate 102 to the total weight of the negative electrode plate 102 is 30%.

In some further specific embodiments, the proportion of the ionic conductive additive provided in the positive electrode plate 101 to the total weight of the positive electrode plate 101 is 15%. The proportion of the ionic conductive additive provided in the negative electrode plate 102 to the total weight of the negative electrode plate 102 is 15%.

It is worth mentioning that, in the related art, carbon black conductive additive is directly used to solve the problems of electronic conductivity and ionic conductivity of the positive and negative electrode plates at one time. In this way, the carbon black conductive additive must satisfy these two requirements at the same time, wherein it is necessary to ensure not only high electronic conductivity, but also high oil absorption to ensure good liquid storage performance, which greatly reduces the selectivity of the material.

In some embodiments, the positive electrode plate 101 provided with the ionic conductive additive is also provided with an electronic conductive additive, wherein the proportion range of ionic conductive additive in the total weight of positive electrode conductive additive is [5%, 100%]. The total weight of the positive electrode conductive additive is the sum of the weight of the ionic conductive additive of the positive electrode plate 101 and the weight of the electronic conductive additive of the positive electrode plate 101. The negative electrode plate 102 provided with the ionic conductive additive is also provided with an electronic conductive additive, wherein the proportion range of ionic conductive additive in the total weight of negative electrode conductive additive is [5%, 100%]. The total weight of the negative electrode conductive additive is the sum of the weight of the ionic conductive additive of the negative electrode plate 102 and the weight of the electronic conductive additive of the negative electrode plate 102. It is worth mentioning that, in systems with high electronic conductivity, the ionic conductive additive of the present disclosure can be used alone. It can also be used in combination with other conductive additives in other fields. In the present disclosure, the needs to address electronic conductivity and ionic conductivity are separated, wherein the conductivity of lithium ions is solved by employing an ionic conductive additive alone, which can optimize the formulation of the battery, increase the range of materials that can be selected and contribute to cost savings.

In some specific embodiments, the proportion of the ionic conductive additive in the total weight of the positive electrode conductive additive is 5%. The proportion of the ionic conductive additive in the total weight of the negative electrode conductive additive is 5%.

In some further specific embodiments, the proportion of the ionic conductive additive in the total weight of the positive electrode conductive additive is 100%. The proportion of the ionic conductive additive in the total weight of the negative electrode conductive additive is 100%.

In some other specific embodiments, the proportion of the ionic conductive additive in the total weight of the positive electrode conductive additive is 52.5%. The proportion of the ionic conductive additive in the total weight of the negative electrode conductive additive is 52.5%.

In some embodiments, a positive electrode current collector 103 is provided on one side of the positive electrode plate 101. The positive electrode plate 101 comprises a mixture of the positive electrode active substance and the ionic conductive additive. One side of the negative electrode plate 102 is provided with a negative electrode current collector 104, wherein the negative electrode plate 102 comprises a mixture of the negative electrode active substance and the ionic conductive additive.

It is worth explaining that a mixture of the negative electrode active substance and the ionic conductive additive is applied to one end of the negative electrode current collector 104 by coating. The mixture of the positive electrode active substance and the ionic conductive additive is applied to one end of the positive electrode current collector 103 by coating.

In some embodiments, the positive electrode current collector 103 is provided as an aluminum foil. The negative electrode current collector 104 is provided as a copper foil.

In some specific embodiments, the positive electrode current collector 103 is provided as an aluminum foil with a thickness of 13µm. The negative electrode current collector 104 is provided as a copper foil with a thickness of 6µm.

FIG. 2 is a structural schematic view of a lithium-ion battery provided in the present disclosure.

As shown in FIG. 2, the present disclosure provides a lithium-ion battery, comprising a plurality of the electrode plate groups as described in any one of the second aspect.

It is worth noting that a battery package shell 105 is provided outside of the electrode plate group, wherein the battery package shell 105 is made of aluminum-plastic film.

The present disclosure proposes Comparative Example 1, Example 1, Comparative Example 2, and Example 2. The lithium-ion batteries prepared in the following Examples and Comparative Examples all went through the manufacturing processes of liquid injection, aging, formation, and capacity dividing.

The liquid injection process includes aligning the suction port of the vacuum pump with the injection port of the battery, turning on the vacuum pump to evacuate the battery case, turning off the vacuum pump after evacuation, making the injection port of the injection device inserted into the injection port of the battery, and then performing the liquid injection.

It is worth noting that, in order to ensure the effect of liquid injection, multiple injections can be carried out, and the injection port is sealed after liquid injection.

The aging process includes selecting battery groups for aging operations.

The formation process includes connecting the line of the formation machine to the battery in accordance with the positive electrode and negative electrode, utilizing the formation machine for formation, and then completing the selection of parameters for each battery group through a computer according to the battery model.

The capacity dividing process includes dividing the capacity of the compliant batteries after formation, and utilizing a grading systems to perform the dividing operation on the batteries.

The sorting process includes sorting batteries, including placing the battery under a collection module during the sorting process, then connecting the collection module and the batteries, and testing various parameters of the batteries via four steps of discharging, charging, discharging, and recharging.

### Comparative Example 1

The positive electrode active substance was selected as lithium iron phosphate, and the positive electrode current collector was selected as an aluminum foil with a thickness of 13um.

The weight ratios of the positive electrode plate were: 95% positive electrode active substance, 2% polyvinylidene difluoride (PVDF), and 3% carbon black conductive additive (Super-P).

The negative electrode active substance was artificial graphite, and the negative electrode current collector was a copper foil with a thickness of 6um.

The weight ratios of the negative electrode plate were: 95% negative electrode active substance, 2% styrene butadiene rubber (SBR), 2% carboxymethyl cellulose (CMC), and 1% carbon black conductive additive.

The electrolyte system was Ethylene carbonate (EC): Ethyl Methyl Carbonate (EMC) =3:7, lithium hexafluorophosphate (1M LiPF6) with a concentration of 1 mol/L, and 2% vinylene carbonate (VC).

### Example 1

The positive electrode active substance was selected as lithium iron phosphate, and the positive electrode current collector was selected as an aluminum foil with a thickness of 13um.

The weight ratios of the positive electrode plate were: 95% positive electrode active substance, 2% polyvinylidene fluoride, 1% carbon black conductive additive, 2% silicon dioxide.

The oil absorption of silicon dioxide was 300ml/100g and the median particle size was 5um.

The negative electrode active substance was artificial graphite, and the negative electrode current collector selected a copper foil with a thickness of 6um.

The weight ratios of the negative electrode plate were: 95% negative electrode active substance, 2% styrene butadiene rubber, 2% sodium carboxymethyl cellulose, and 1% carbon black conductive additive.

The electrolyte system was vinyl carbonate: methyl ethyl carbonate = 3:7, lithium hexafluorophosphate with a concentration of 1mol/L, and 2% vinylidene carbonate.

The electrode groups of Example 1 and Comparative Example 1 mentioned above were assembled in groups to make flexible package batteries, and the shell was packaged with an aluminum-plastic film material for packaging and molding, and then the lithium-ion battery was produced by electrolyte injection, aging, formulation, and capacity dividing, etc.

The above Example 1 and Comparative Example 1 were repeated several times to take an average value, and the battery performance comparison was obtained as shown in Table 1.

| Table 1 | | |
|---|---|---|
| Battery Type | Comparative Example 1 | Example 1 |
| Battery capacity (Ah) | 4.9-5.1 | 4.9-5.1 |
| Battery internal resistance (m Ω) | 4.52 | 4.63 |
| 5C discharging capacity /0.2C discharging capacity | 47% | 65% |
| Battery capacity retention rate after 500 high-temperature cycles(45°C,1C/1C) | 85% | 93% |

Analysis of the battery test chart in Table 1 shows that the battery capacity of Comparative Example 1 is consistent with that of Example 1 and is in the interval [4.9Ah, 5.1Ah]. In Comparative Example 1, the ratio of 5C discharge capacity to 0.2C discharge capacity is 47%. In Example 1, the ratio of 5C discharge capacity to 0.2C discharge capacity is 65%. It can be seen that, by adopting ionic conductive additive of Example 1 in the positive electrode plate, the large-rate discharge performance is greatly improved. The capacity retention rate of the batteries of Comparative Example 1 and Example 1 after 500 cycles of 1C charging and 1C discharging at a temperature of 45 °C is 85% and 93%, respectively. It can be seen that Example 1 has improved battery capacity retention rate after high-temperature cycles due to the reduction of side reactions brought about by the positive conductive additive.

### Comparative Example 2

The positive electrode active substance was selected as lithium iron phosphate, and the positive electrode current collector was selected as aluminum foil with a thickness of 13um.

The weight ratios of the positive electrode plate were: 96% positive electrode active substance, 2% polyvinylidene fluoride, and 2% carbon black conductive additive.

The negative electrode active substance was artificial graphite, and the negative electrode current collector was a copper foil with a thickness of 6um.

The weight ratios of the negative electrode plate were: 95% negative electrode active substance, 2% styrene butadiene rubber, 2% sodium carboxymethyl cellulose, and 1% carbon black conductive additive.

The electrolyte system was vinyl carbonate: methyl ethyl carbonate = 3:7, lithium hexafluorophosphate with a concentration of 1mol/L, and 2% vinylidene carbonate.

### Example 2

The positive electrode active substance was selected as lithium iron phosphate, and the positive electrode current collector was selected as an aluminum foil with a thickness of 13um.

The weight ratio of the positive electrode materials was: 96% positive electrode active substance, 2% polyvinylidene fluoride, 1% carbon black conductive additive, and 2% carbon black conductive additive.

The negative electrode active substance was artificial graphite, and the negative electrode current collector was a copper foil with a thickness of 6um.

The weight ratios of the negative electrode materials were: 95% negative electrode active substance, 2% styrene butadiene rubber, 2% sodium carboxymethyl cellulose, and 1% silicon dioxide.

The oil absorption of silicon dioxide was 300ml/100g and the median particle size was 5um.

The electrolyte system was vinyl carbonate: methyl ethyl carbonate = 3:7, lithium hexafluorophosphate with a concentration of 1mol/L, and 2% vinylidene carbonate.

The electrode groups of Example 2 and Comparative Example 2 mentioned above were assembled in groups to make flexible package batteries, and the shell was packaged with an aluminum-plastic film material for packaging and molding, and then the lithium-ion battery was produced by electrolyte injection, aging, formation, and capacity dividing, etc.

The above Example 2 and Comparative Example 2 were repeated several times to take the average value, and the battery performance comparison was obtained as shown in Table 2.

| Table 2 | | |
|---|---|---|
| Battery Type | Comparative Example 2 | Example 2 |
| Battery capacity (Ah) | 4.9-5.1 | 5.1-5.2 |
| Internal resistance of the battery (m Ω) | 4.51 | 4.53 |
| 5C constant-current charging capacity /0.2C discharging capacity | 47% | 58% |

As can be seen by analyzing the battery test chart in Table 2 above, the battery capacity of the battery of the Comparative Example and the battery of the Example of the present disclosure are consistent and are in the interval [4.9Ah, 5.2Ah]. In Comparative Example 2, the ratio of 5C constant current charging capacity to 0.2C discharging capacity is 47%. In Example 2, the ratio of 5C constant current charging capacity to 0.2C discharging capacity is 58%. As can be seen, when the ionic conductive additive of Example 2 is used in the negative electrode plate, the battery capacity is improved, and the large-rate charging performance is also improved.

Although the embodiments of the present disclosure have been described in detail above, it will be obvious to those of ordinary skill in the art, and various modifications and changes can be made to these embodiments. It should be understood, however, that such modifications and changes are within the scope and spirit of the present disclosure as stated in the claims. Moreover, the present disclosure illustrated herein can have other embodiments and can be implemented or realized in a variety of ways.

## Claims

1. An ionic conductive additive, wherein a resistivity of the ionic conductive additive is greater than 10Ω·m;
an oil absorption of the ionic conductive additive is greater than 100ml/100g;
the ionic conductive additive is a solid powder; and
a median particle size of the ionic conductive additive is less than 50 µm.

2. An electrode plate group, wherein the electrode plate group comprises: a positive electrode plate and a negative electrode plate, wherein at least one of the positive electrode plate and the negative electrode plate comprises the ionic conductive additive according to claim 1;
the positive electrode plate is provided with a positive electrode active substance, and
the negative electrode plate is provided with a negative electrode active substance.

3. The electrode plate group according to claim 2, wherein a proportion range of the ionic conductive additive provided in the positive electrode plate to a total weight of the positive electrode plate is [0.01%, 30%]; and
a proportion range of the ionic conductive additive provided in the negative electrode plate to a total weight of the negative electrode plate is [0.01%, 30%].

4. The electrode plate group according to claim 2, wherein the positive electrode plate provided with the ionic conductive additive is further provided with an electronic conductive additive, and a proportion range of the ionic conductive additive in a total weight of a positive electrode conductive additive is [5%, 100%]; and the total weight of the positive electrode conductive additive is a sum of a weight of the ionic conductive additive of the positive electrode plate and a weight of the electronic conductive additive of the positive electrode plate; and
the negative electrode plate provided with the ionic conductive additive is further provided with the electronic conductive additive, and a proportion range of the ionic conductive additive in a total weight of a negative electrode conductive additive is [5%, 100%]; and the total weight of the negative electrode conductive additive is a sum of a weight of the ionic conductive additive of the negative electrode plate and a weight of the electronic conductive additive of the negative electrode plate.

5. The electrode plate group according to claim 2, wherein a material of the positive electrode active substance is selected from at least one of lithium cobalt oxide, lithium manganate, lithium iron phosphate, lithium manganese iron phosphate, lithium nickel cobalt manganate, and nickel manganese spinel.

6. The electrode plate group according to claim 2, wherein a material of the negative electrode active substance is selected from at least one of natural graphite, artificial graphite, mesocarbon microbeads, lithium titanate, silicon alloys, tin alloys, and active lithium metal.

7. The electrode plate group according to claim 2, wherein one side of the positive electrode plate is provided with a positive electrode current collector, wherein the positive electrode plate comprises a mixture of the positive electrode active substance and the ionic conductive additive; and
one side of the negative electrode plate is provided with a negative electrode current collector, wherein the negative electrode plate comprises a mixture of the negative electrode active substance and the ionic conductive additive.

8. The electrode plate group according to claim 7, wherein the positive electrode current collector is provided as an aluminum foil; and the negative electrode current collector is provided as a copper foil.

9. A lithium-ion battery, wherein the lithium-ion battery comprises a plurality of electrode plate groups according to any one of claims 3-8.

10. The lithium-ion battery according to claim 9, wherein the lithium-ion battery further comprises a battery package shell; and the electrode plate groups are provided within the package shell.
